# EUROPÄISCHE PATENTANMELDUNG

(11) **EP 4 136 966 A2**
(43) Veröffentlichungstag der Anmeldung: **22.02.2023**
(21) Anmeldenummer: 22020393.9
(22) Anmeldetag: 15.08.2022
(51) Int. Cl.: A01K 15/02

(54) **BESCHÄFTIGUNGSVORRICHTUNG BZW. -SYSTEM, INSBESONDERE ZUR VERWENDUNG FÜR HAUSTIERE**

(30) Priorität: 18.08.2021 DE 202021002701 U
(71) Anmelder: Cholewa, Ilona, 42555 Velbert (DE)
(72) Erfinder: Cholewa, Ilona, 42555 Velbert (DE)

(57) **Zusammenfassung**

Die vorliegende Erfindung betrifft eine Beschäftigungsvorrichtung bzw. ein Beschäftigungssystem, insbesondere zur Verwendung für Haustiere wie Katzen, umfassend
eine zum Bedienen durch einen Nutzer vorgesehene Haltegriffvorrichtung (1),
eine zum Halten eines Objektes (4, 4a, 6.4, 7.3, 8.4, 9.4, 10.6, 11.7, 12.5) vorgesehene Objekthaltevorrichtung (3, 3a),
und
ein zum Verbinden der Haltegriffvorrichtung (1) mit der Objekthaltevorrichtung (3) vorgesehenes Verbindungsmittel (2),
wobei das aufnehmbare Objekt eine richtige, von der Katze verzehrbare bzw. essbare Beute ist.

## Beschreibung

Die Erfindung betrifft eine Beschäftigungsvorrichtung bzw. ein Beschäftigungssystem, insbesondere zur Verwendung für Haustiere wie Katzen.

Körperliche Aktivität, spielende Beschäftigung und das Ausleben des Jagdinstinkts sind wichtige Voraussetzungen für die Gesundheit und das Wohlergehen insbesondere von Katzen. Dies gilt umso mehr für Katzen, die ausschließlich in Wohnungen gehalten werden.

Katzenangeln sind als Katzenspielzeug im Stand der Technik bekannt.

Die bisher bekannten Katzenangeln weisen als Spielantrieb in der Regel ein nicht verzehrbares als Spielzeug dienendes Element auf, wie zum Beispiel Federn, Stoffelemente oder dergleichen Lockelemente für Katzen.

Das Problem, das mit diesen bekannten Lockelementen einhergeht, ist dass die Katzen schnell die Beschäftigungsmotivation an selbigen verlieren, beispielsweise wenn das Lockelement gefangen wurde oder wenn die Katzen einfach schnell das Interesse verlieren.

Vor diesem Hintergrund liegt der vorliegenden Erfindung die Aufgabe zugrunde, ein Katzenspielzeug bereitzustellen, welches zum einen ein möglichst dauerhaftes Spielinteresse der Katzen ermöglicht und zusätzlich den Jagdinstinkt der Katzen erlebbarer macht. Darüber hinaus soll mit einem erfindungsgemäßen Katzenspielzeug, insbesondere in Ausprägung bzw. Ausgestaltung als Beschäftigungssystem die erlebte Beziehungsqualität zwischen Halter und Katze verbessert werden.

Zur technischen Lösung dieser Aufgabe sieht die vorliegende Erfindung eine Beschäftigungsvorrichtung bzw. -system, insbesondere zur Verwendung für Haustiere wie Katzen, vor, welche eine zum Bedienen durch einen Nutzer vorgesehene Haltegriffvorrichtung, eine zum Halten bzw. zumindest teilweisen Aufnehmen eines Objektes vorgesehene Objekthaltevorrichtung, und ein zum Verbinden der Haltegriffvorrichtung mit der Objekthaltevorrichtung vorgesehenes Verbindungsmittel umfasst bzw. aufweist, wobei das aufnehmbare Objekt eine richtige, von der Katze verzehrbare bzw. essbare Beute ist.

Die Erfindung macht insbesondere von der Erkenntnis Gebrauch, dass ein möglichst dauerhaftes Spielinteresse der Katzen ermöglicht wird und zusätzlich den Jagdinstinkt der Katzen erlebbarer macht, wenn das Objekt der Jagd von der Katze verzehrbar bzw. essbar ist. Dies wird erfindungsgemäß vorteilhafterweise insbesondere erreicht durch eine verzehrbare Beute als Belohnung der Jagd. Durch erfindungsgemäß vorgesehene unterschiedliche Zusammensetzung und Form bzw. Ausführungen der verzehrbaren Beute werden Geschmacksvorlieben und Abwechslung Rechnung getan und halten das Interesse aufrecht. Ferner wird mit der erfindungsgemäßen Lösung vorteilhafterweise sowohl für die Katze als auch für den Halter der Katze, insbesondere in Ausprägung bzw. Ausgestaltung des erfindungsgemäßen Katzenspielzeugs als Beschäftigungssystem, die erlebte Beziehungsqualität zwischen Halter und Katze weiter verbessert und intensiviert.

Eine weitere vorteilhafte Ausgestaltung der Erfindung sieht vor, dass dem Tierbesitzer bzw. Halter der Katze eine Rückmeldung über das Spielverhalten sowie ergänzende Informationen bereitgestellt werden bzw. bereitstellbar sind. Eine bevorzugte Ausgestaltung sieht dabei eine Software Applikation (App) vor, die auf einem Smartphone, Tablet, Personal Computer oder ähnliches installiert und ausgeführt wird, mit der verschiedenste Aktivitäten der Katze, die zum Teil oder vollständig vom erfindungsgemäßen Katzenspielzeug bzw. in Kombination mit selbigem bereitgestellt werden und/oder vom Tierhalter ausgewählt, eingegeben oder vorgegeben werden können. Dies können vorteilhafterweise bestimmte Spielabläufe oder Spielparameter sein, persönliche Daten, biologische Daten zu der Katze, wie Alter, Gewicht, Erkrankungen, und/oder dergleichen, und/oder daraus abgeleitete Kenngrößen bzw. Aktivitätsgrößen bzw. -parameter. Vorteilhafterweise sind erfolgte Spielabläufe und deren Kenngrößen bzw. Parameter speicherbar bzw. loggbar, insbesondere in einem Speicher, beispielsweise eines Smartphones oder dergleichen, oder in einer Cloud-Lösung. So ist später auch eine Auswertung bzw. Analyse der gespeicherten Daten und Informationen bzw. der daraus abgeleiteten Informationen ermöglicht. Auch ist eine zusätzliche Eingabe von Tierparametern in die App und/oder deren Auswertung und/oder Weiterverarbeitung für Kennzahlen wie beispielsweise ein sogenannter "Aktivitätsindex" für ein solches erfindungsgemäßes Beschäftigungssystem erfindungsgemäß vorgesehen.

Vorteilhafterweise weist die Haltegriffvorrichtung, das Verbindungsmittel und/oder die Objekthaltevorrichtung, einzeln oder in Kombination, Sensoren auf, die vorteilhafterweise entsprechende detektierte Sensorinformationen an die Applikation (App) übermitteln. Eine weitere Ausgestaltung der Erfindung sieht vor, dass die Applikation (App) auch zur Steuerung von wenigstens einem Aktorikelement ausgebildet bzw. eingerichtet ist, welches seitens des erfindungsgemäßen Katzenspielzeugs vorgesehen ist. Das insbesondere als System ausgebildete Katzenspielzeug kann auch mehrere Aktorikelemente aufweisen. Das wenigstens eine Aktorikelement ist vorteilhafterweise zur gesteuerten Freigabe des Fangobjekts nutzbar.

Die Erfindung macht insbesondere von der Erkenntnis Gebrauch, dass die Katze beim Spiel mit der Beschäftigungsvorrichtung, insbesondere in Form einer Katzenangel eine richtige, essbare Beute als Objekt beim Fang erhält. Mit Hilfe der Haltevorrichtung der erfindungsgemäßen Beschäftigungsvorrichtung wird die Beute an dem freien Ende des vorzugsweise als Seil, Leine bzw. Schnur ausgebildeten Verbindungsmittels so fixiert bzw. befestigt, dass sich das Objekt bzw. die Beute einerseits nicht selbständig lösen kann und andererseits beim Fang durch die Katze ganz oder teilweise verzehrt werden kann. Das Entfernen der Beute aus der Objekthaltevorrichtung kann durch die Katze erfolgen oder vorteilhafterweise durch einen steuerbaren, vorzugsweise fernsteuerbaren Mechanismus. Um eine größeren Aktionsradius zu erhalten, ist erfindungsgemäß vorgesehen, die Beschäftigungsvorrichtung mit einer Rolle, insbesondere nach Art einer sogenannten Angelrolle, auszuführen, auf bzw. von der eine längere Leine bzw. Schnur aufwickelbar bzw. abwickelbar ist. Eine weitere vorteilhafte Ausgestaltung der Erfindung sieht dabei vor, dass die Haltegriffvorrichtung eine Rolle aufweist, mittels welcher das Verbindungsmittel derart aufwickelbar ist, dass eine Distanz zwischen der Haltegriffvorrichtung und der Objekthaltevorrichtung variierbar ist.

Eine weitere vorteilhafte Ausgestaltung der Erfindung sieht vor, dass die Objekthaltevorrichtung dazu eingerichtet bzw. ausgebildet ist, das Objekt mechanisch oder elektromechanisch zu halten. Vorteilhafterweise weist die Objekthaltevorrichtung wenigstens eine Befestigungsmöglichkeit bzw. Befestigungseinrichtung für das Verbindungsmittel auf.

Eine weitere vorteilhafte Ausgestaltung der Erfindung sieht vor, dass die Objekthaltevorrichtung und das Objekt kraftschlüssig, insbesondere reibschlüssig, miteinander verbindbar sind. Eine bevorzugte Ausgestaltung der Erfindung sieht vor, dass zum Entfernen der Beute eine Kraft von etwa 0,01 N bis etwa 20 N erforderlich ist. Vorteilhafterweise ist die Kraft zum Entfernen der Beute einstellbar, so dass beispielsweise in Abhängigkeit der Ausführung der als Objekt dienenden Beute und/oder der Objekthaltevorrichtung eine individuelle Anpassung erfolgen kann, welche insbesondere die Bedürfnisse und/oder Fähigkeiten der jeweiligen Katze berücksichtigt. Insgesamt ist so ein Beschäftigungs- bzw. Trainingseffekt definiert erzielbar.

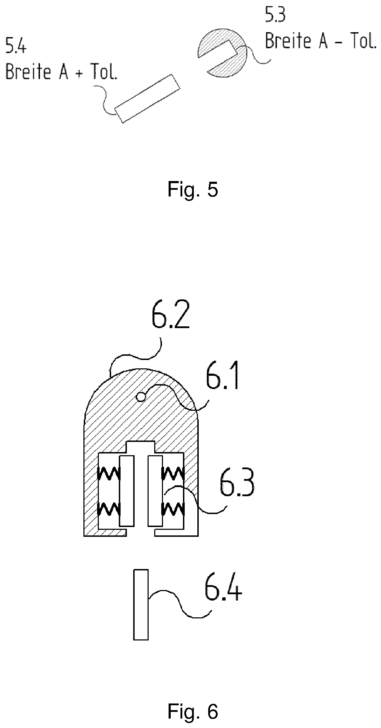

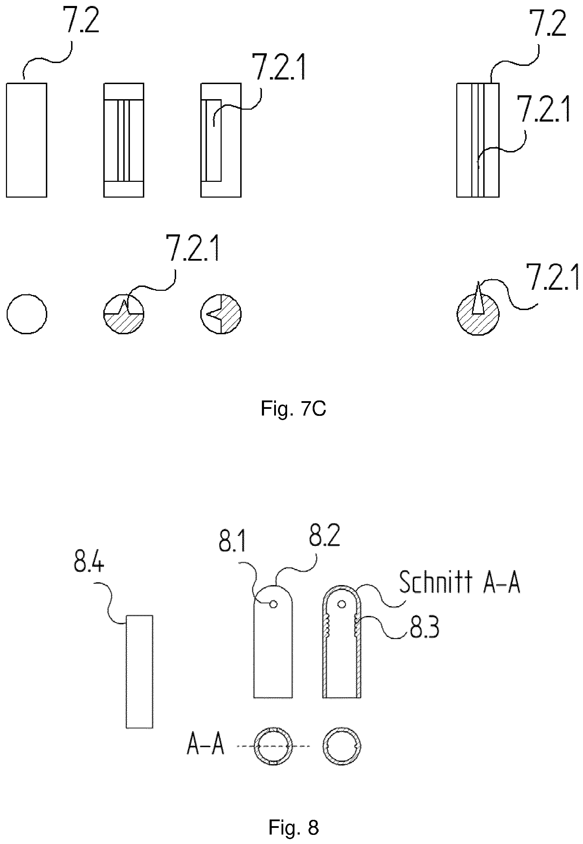

Eine weitere vorteilhafte Ausgestaltung der Erfindung sieht vor, dass die Objekthaltevorrichtung eine Aufnahme aufweist, durch welche das Objekt mittels an der Aufnahme durch Federkraft befestigten Haltebacken oder mittels Zusammendrücken von Haltegreifern über eine Drehbewegung nach einer Art Überwurfmutter, beispielsweise ähnlich einer Bohrfutteraufnahme, aufnehmbar ist. Erfindungsgemäß ist ferner durch eine gezielte Dimensionierung des Objektes und der Objekthaltevorrichtung, eine Fixierung erreichbar, zum Beispiel durch eine geeignete Wahl einer Passung zwischen Objekt und Objekthaltevorrichtung (vgl. insbesondere auch Fig. 5). Der Halteeffekt kann vorteilhafterweise auch durch eine lokal ausgeführte geringe Einquetschung des Objektes erfolgen, insbesondere durch einen verjüngten Bereich in der Objekthaltevorrichtung mit zum Beispiel Wellen aus Tälern und Bergen (vgl. insbesondere Fig. 8, Bezugszeichen 8.3). Vorteilhafterweise wird die Überwurfmutter auf den Grundkörper der Haltevorrichtung geschraubt. Durch die Anzahl der aufgeschraubten Gewindegänge und das Maß der Aufschraubung lässt sich vorteilhafterweise die Stärke der Fixierung der als Objekt dienenden Beute einstellen, insbesondere da die Haltegreifer erfindungsgemäß je nach Aufschraubung mehr oder weniger zusammengedrückt werden. Somit sind vorteilhafterweise unterschiedliche Schwierigkeitsgrade zum Entnehmen der Beute einstellbar.

Vorteilhafterweise ist vorgesehen, dass die Objekthaltevorrichtung ferner eine Auslösevorrichtung aufweist, welche zur Freigabe eines zwischen den Haltebacken der Objekthaltevorrichtung angeordneten Objekts eingerichtet ist. Diese kann vorteilhafterweise durch einen Hilfsmechanismus (vgl. insbesondere Bezugszeichen 7) ermöglicht werden. Die Bügel (vgl. insbesondere Bezugszeichen 11.4) der Haltebacken (vgl. insbesondere Bezugszeichen 11.3) sorgen in der Auslösevorrichtung (vgl. insbesondere Bezugszeichen 11.2, 11.3, 11.4, 11.5, 11.6, 11.8) vorteilhafterweise für ein geführtes Fixieren und Lösen des Objektes (vgl. insbesondere Bezugszeichen 10.6, 11,7). Die Auslösevorrichtung kann vorteilhafterweise Weise aus einer Kombination einer Spule mit Eisenkern (Elektromagnet, vgl. insbesondere Bezugszeichen 10.4, 11.5), einem Freigabezylinder (vgl. insbesondere Bezugszeichen 10.5, 11.6) mit einem magnetischen Werkstoff und einer Vorschubfeder (vgl. insbesondere Bezugszeichen 10.2, 11.2) gebaut werden. Wird an die Spule ein elektrischer Strom angelegt, so wird der Freigabezylinder über seinen vorhandenen magnetischen Werkstoff angezogen. Die Vorschubfeder wird zusammengedrückt und die Haltebacken (vgl. insbesondere Bezugszeichen 10.3, 11.3) für das Beuteobjekt (vgl. insbesondere Bezugszeichen 10.6, 11.7) fixieren dieses. Wird der elektrische Stromkreis unterbrochen, wird der Freigabezylinder nicht mehr durch den Elektromagneten gehalten und die Vorschubfeder schiebt den Freigabezylinder zwischen die Haltebacken und öffnet diese so, so dass das Beuteobjekt aus der Halterung ohne Kraftaufwendung entnommen werden kann. Eine weitere vorteilhafte Ausgestaltung der Erfindung sieht vor, dass die Haltegriffvorrichtung einen Schalter aufweist, welcher zur Betätigung der Auslösevorrichtung vorgesehen ist.

Eine weitere vorteilhafte Ausgestaltung der Erfindung sieht vor, dass die Objekthaltevorrichtung eine erste Wandung mit einem Haltestift und eine zweite Wandung aufweist, wobei die erste Wandung und die zweite Wandung miteinander verbindbar sind. Das Objekt (vgl. insbesondere Bezugszeichen 7.3) weißt vorteilhafterweise eine Bohrung bzw. Öffnung auf, die passend für den Haltestift ausgelegt ist. Beim Bestücken der Objekthaltevorrichtung mit dem Objekt (vgl. insbesondere Bezugszeichen 7.3) wird dieses auf den Haltestift gesteckt. Der Haltestift weist vorteilhafterweise eine spitze und scharfe Schneidfläche auf, die beim Herausziehen der Beute aus der Objekthaltevorrichtung die Beute aufschneidet und somit zur Entnahme freigibt bzw. die Entnahme durch die Katze erleichtert. In Fig. 7C ist links ein Haltestift mit Schneidschutz für den Bestücker ausgeführt; in der Ausführung rechts ist die Schneideinrichtung frei zugänglich. Vorteilhafterweise ist vorgesehen, dass das Objekt eine zum Haltestift korrespondierende Öffnung aufweist, mit der die Beute beim Hineinschieben in das Objekt mittels des Haltestifts fixierbar ist.

Vorteilhafterweise ist das Objekt als essbare Beute bzw. essbares Futtermittel in unterschiedlichen Formen und auf unterschiedliche Art und Weise herstellbar, beispielsweise auch in Form von Ergänzungsfuttermittel, wie Trockenfutter, Leckerlies, Kräcker oder dergleichen, und ist so vorteilhafterweise derart ausgestaltet bzw. geformt, dass das Objekt zur Aufnahmen durch die bzw. mittels der Objekthaltevorrichtung geeignet ist, vorzugsweise derart, dass das Objekt von der Katze insbesondere mindestens teilweise sichtbar wahrgenommen werden kann. Vorteilhafterweise ist vorgesehen, das Objekt neben einfachen geometrischen Formen auch in Form von Nachahmungen von Beutetieren, beispielsweise in Form eines Fisches, einer Maus oder eines Vogels, ausbildbar bzw. ausgebildet ist.

Eine weitere vorteilhafte Ausgestaltung der Erfindung sieht vor, dass die einzelnen Komponenten der erfindungsgemäßen Beschäftigungsvorrichtung, insbesondere die Haltegriffvorrichtung, die Objekthaltevorrichtung und das Verbindungsmittel, aus Holz, Metall und/oder Kunststoff sind.

Eine weitere vorteilhafte Ausgestaltung der Erfindung sieht eine Beschäftigungsvorrichtung vor, wobei die Objekthaltevorrichtung (vgl. insbesondere Bezugszeichen 9.2) aus einem Unterteil (vgl. insbesondere Bezugszeichen 9.2A) und einem Oberteil (vgl. insbesondere Bezugszeichen 9.2.B) besteht. In Unter- und Oberteil befinden sich Magnete (vgl. insbesondere Bezugszeichen 9.3), die beim Zusammenstecken von Unter- und Oberteil das Beuteobjekt (vgl. insbesondere Bezugszeichen 9.4) durch eine geeignete Passung fixieren.

Eine weitere vorteilhafte Ausgestaltung der Erfindung sieht vor, dass eine Software Applikation (App), die auf einem Smartphone, Tablet, Personal Computer oder ähnliches installiert wird, verschiedenste Aktivitäten der Katze, die zum Teil oder vollständig vom Katzenspielzeug bereitgestellt werden oder vom Tierhalter eingegeben bzw. ausgewählt oder vorgegeben werden kann, speichern sowie sinnvoll verarbeiten. Dies umfasst vorteilhafterweise insbesondere:
- Eine Bestimmung der Zeitdauer, bis die Katze ihre Beute erlangt hat durch Sensormessung des Spielzeugs und Übertragung an die App.
- Eine Bestimmung der zurückgelegten Wegstrecke, bis die Katze ihre Beute erlangt hat durch Sensormessung des Spielzeugs und Übertragung an die App.
- Eine Dokumentierung und/oder Übermittlung der Haltekraft für die Beute an die App., um den Einsatz und den Aktivitätsaufwand der Katze zu bestimmen.
- Eine Vorgabe von Spielabläufen, insbesondere im Hinblick auf Trainingserfolge, Aufbau von Trainingsprogrammen und/oder dergleichen.
- Eingaben in die Applikation (App) von Tiermerkmalen, wie Rasse, Größe, Gewicht, Geschlecht, Alter, insbesondere um daraus in Verbindung mit den übermittelten Daten des erfindungsgemäßen Spielzeugs und deren Nutzungshäufigkeit Aktivitätskenndaten zu generieren, um so die Entwicklung des Spielverhaltens zu verfolgen und/oder gezielt weiter zu fördern.

Eine weitere vorteilhafte Ausgestaltung der Erfindung sieht vor, dass die Objekthaltevorrichtung per Fernsteuerung im Raum bewegt werden kann, vorzugsweise in Verbindung mit einer ferngesteuerten Drohne oder dergleichen fernsteuerbarer Einrichtung.

Eine weitere vorteilhafte Ausgestaltung der Erfindung sieht vor, dass die essbare Beute eine bestimmte, für Katzen vorteilhafte Futterzusammensetzung aufweist, die im Folgenden beispielhaft beschrieben wird:
- Vermeidung von Zucker, Geschmacksverstärkern und/oder von Füllstoffen;
- Ein Fleischanteil bzw. Fischanteil von mindestens 80 % im Futter;
- Nur tierisches Eiweiß und/oder Proteine;
- Hoher Gehalt an Rohproteinen;
- Ein hoher Anteil ungesättigter Fettsäuren;
- Vermeidung von Kohlenhydraten; und/oder
- Variation den Wassergehaltes in einem Bereich von 10% bis 65% um
   o die Energiedichte der Beute einstellen zu können, um so gezielt eine optimale Beute für z.B. Jungtiere (hoher Energiebedarf) und alte Tiere (niedriger Energiebedarf) zu erzeugen; und/oder
      o die Festigkeit des Beutestückes einstellen zu können, um so insbesondere unterschiedliche Kraftaufwände der Katze beim Entfernen der Beute aus der Haltevorrichtung zu erzeugen.

Nachfolgende Zusammensetzungen für die essbare bzw. verzehrbare Beute, haben sich als besonders vorteilhaft erwiesen: Wie zum Beispiel:
- Beispiel 1: Futter Typ "Junior Huhn 1" umfassend:
   o Keine Geschmacksverstärker
   o Huhn - Fleischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod;
   o Wassergehalt 15-35%
- Beispiel 2: Futter Typ "Senior Huhn 1" umfassend:
   o Keine Geschmacksverstärker
   o Huhn - Fleischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 35-65%
- Beispiel 3: Futter Typ "Junior Ente 1" umfassend:
   o Keine Geschmacksverstärker
   o Ente - Fleischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 15-35%
- Beispiel 4: Futter Typ "Senior Ente 1" umfassend:
   o Keine Geschmacksverstärker
   o Ente - Fleischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 35-65%
- Beispiel 5: Futter Typ "Junior Lachs 1" umfassend:
   o Keine Geschmacksverstärker
   o Lachs - Fischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 15-35%
- Beispiel 6: Futter Typ "Senior Lachs 1" umfassend:
   o Keine Geschmacksverstärker
   o Lachs - Fischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 35-65%
- Beispiel 7: Futter Typ "Junior Forelle 1" umfassend:
   o Keine Geschmacksverstärker
   o Forelle - Fischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 15-35%
- Beispiel 8: Futter Typ "Senior Forelle 1" umfassend:
   o Keine Geschmacksverstärker
   o Forelle - Fischanteil mindestens 80%
   o Eiweißgehalt 26% bis zu 30% bestehend aus nur tierischen Eiweiß
   o Gesamtfettgehalt 6% bis 10% bestehend aus tierischen Fett (z.B. Geflügelfett) oder Pflanzenölen
   o Keine Verwendung von karamelisiertem Zucker
   o Zugabe von Vitaminen und Spurenelementen wie z.B. Vitamin A,D,E und z.B. Eisen, Zink, Jod
   o Wassergehalt 35-65%

Weitere Einzelheiten, Merkmale und/oder Vorteile der Erfindung werden nachfolgend anhand der in den Figuren der Zeichnung dargestellten Ausführungsbeispiele näher erläutert. Dabei zeigen:
- Fig. 1: in einer schematischen Ansicht ein Ausführungsbeispiel einer erfindungsgemäßen Beschäftigungsvorrichtung;
- Fig. 2: in einer schematischen Ansicht ein weiteres Ausführungsbeispiel einer erfindungsgemäßen Beschäftigungsvorrichtung in einem ersten Funktionszustand;
- Fig. 3: in einer schematischen Ansicht das Ausführungsbeispiel einer erfindungsgemäßen Beschäftigungsvorrichtung nach Fig. 2 in einem zweiten Funktionszustand;
- Fig. 4: in einer schematischen Ansicht ein weiteres Ausführungsbeispiel einer erfindungsgemäßen Beschäftigungsvorrichtung;
- Fig. 5: in einer schematischen Ansicht ein weiteres Ausführungsbeispiel einer erfindungsgemäßen Beschäftigungsvorrichtung;
- Fig. 6: in einer schematischen Ansicht ein weiteres Ausführungsbeispiel einer erfindungsgemäßen Beschäftigungsvorrichtung;
- Fig. 7A: in einer schematischen Ansicht ein weiteres Ausführungsbeispiel einer erfindungsgemäßen Beschäftigungsvorrichtung;
- Fig. 7B: in einer schematischen Ansicht ein weiteres Ausführungsbeispiel einer erfindungsgemäßen Beschäftigungsvorrichtung;
- Fig. 7C: in einer schematischen Ansicht ein Ausführungsbeispiel einer erfindungsgemäßen Schneidevorrichtung von Fig. 7A und Fig. B einer erfindungsgemäßen Beschäftigungsvorrichtung;
- Fig. 8: in einer schematischen Ansicht ein weiteres Ausführungsbeispiel einer erfindungsgemäßen Beschäftigungsvorrichtung;
- Fig. 9: in einer schematischen Ansicht ein weiteres Ausführungsbeispiel einer erfindungsgemäßen Beschäftigungsvorrichtung;
- Fig. 10: in einer schematischen Ansicht ein weiteres Ausführungsbeispiel einer erfindungsgemäßen Beschäftigungsvorrichtung;
- Fig. 10a: einen vergrößerten Ausschnitt gemäß Fig. 10;
- Fig. 11: in einer schematischen Ansicht ein weiteres Ausführungsbeispiel einer erfindungsgemäßen Beschäftigungsvorrichtung;
- Fig. 11a: einen vergrößerten Ausschnitt gemäß Fig. 11;
- Fig. 12: in einer schematischen Ansicht ein weiteres Ausführungsbeispiel einer erfindungsgemäßen Beschäftigungsvorrichtung;
- Fig. 13: in einer schematischen Ansicht ein weiteres Ausführungsbeispiel einer erfindungsgemäßen Beschäftigungsvorrichtung bzw. -system; und
- Fig. 14: in einer schematischen Ansicht ein weiteres Ausführungsbeispiel einer erfindungsgemäßen Beschäftigungsvorrichtung bzw. Beschäftigungssystem mit einer Fernsteuerung bzw. Fernsteuerbarkeit.

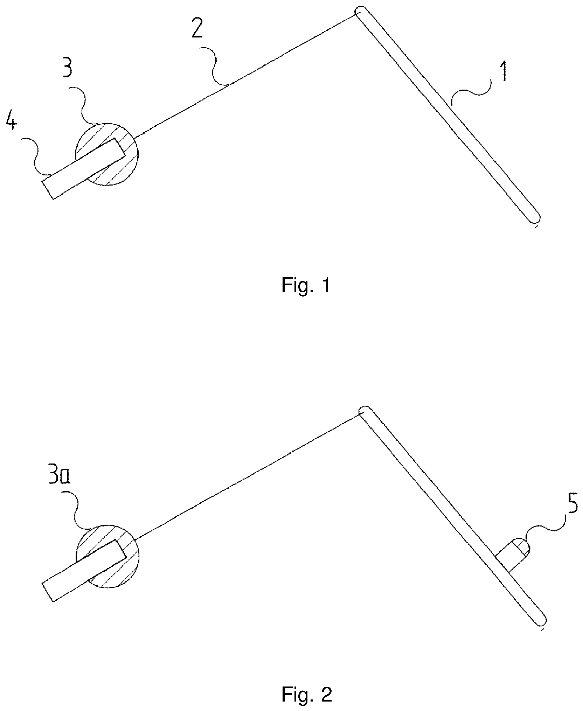

Fig. 1 zeigt eine erfindungsgemäße Beschäftigungsvorrichtung 0 zur Verwendung für Katzen, vorliegend nach Art einer sogenannten Katzenangel. Die Beschäftigungsvorrichtung 0 weist eine zum Bedienen durch einen Nutzer vorgesehene Haltegriffvorrichtung 1, eine zum Halten eines Objektes 4 vorgesehene Objekthaltevorrichtung 3, und ein zum Verbinden der Haltegriffvorrichtung 1 mit der Objekthaltevorrichtung 3 vorgesehenes Verbindungsmittel 2 auf. Mit Hilfe der an dem freien Ende des Verbindungsmittels 2 angeordneten Objekthaltevorrichtung 3 wird ein insbesondere als Beute ausgebildetes Objekt 4 so fixiert, dass sich das Objekt 4 einerseits nicht selbständig aus der Objekthaltevorrichtung 3 lösen kann und andererseits beim Fang durch eine Katze ganz oder teilweise verzehrt werden kann, insbesondere durch Herausziehen des Objekts 4 aus der Objekthaltevorrichtung 3 durch die Katze.

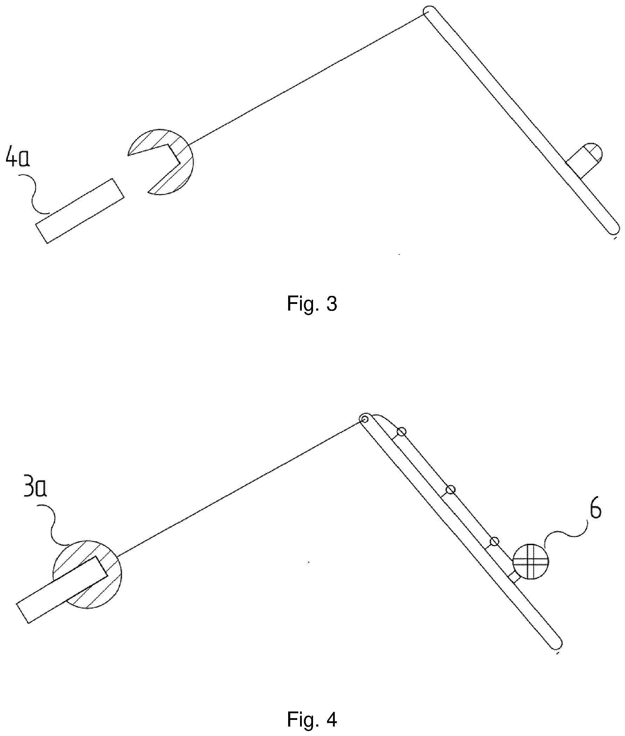

Fig. 2 und Fig. 3 zeigen ein weiteres Ausführungsbeispiel einer erfindungsgemäßen Beschäftigungsvorrichtung 0 zur Verwendung für Katzen. Die Beschäftigungsvorrichtung 0 nach Fig. 2 und Fig. 3 weist wie die Beschäftigungsvorrichtung 0 nach Fig. 1 eine zum Bedienen durch einen Nutzer vorgesehene Haltegriffvorrichtung 1, eine zum Halten eines Objektes 4 vorgesehene Objekthaltevorrichtung 3, und ein zum Verbinden der Haltegriffvorrichtung 1 mit der Objekthaltevorrichtung 3 vorgesehenes Verbindungsmittel 2 auf. Mit Hilfe der an dem freien Ende des Verbindungsmittels 2 angeordneten Objekthaltevorrichtung 3 wird ein insbesondere als Beute ausgebildetes Objekt 4 so fixiert, dass sich das Objekt 4 einerseits nicht selbständig aus der Objekthaltevorrichtung 3 lösen kann und andererseits beim Fang durch eine Katze ganz oder teilweise verzehrt werden kann, insbesondere durch Herausziehen des Objekts 4 aus der Objekthaltevorrichtung 3 durch die Katze. Die Beschäftigungsvorrichtung 0 nach Fig. 2 und Fig. 3 weist ferner einen steuerbaren, insbesondere fernbedienbaren Mechanismus 5 auf, mit welchem eine Freigabe des Objekts 4 von der Objekthaltevorrichtung 3 bewirkbar ist. Fig. 2 zeigt die Beschäftigungsvorrichtung 0 in einem ersten Zustand, in welchem das Objekt 4 von der von der Objekthaltevorrichtung 3 definiert gehalten ist. Fig. 3 zeigt die Beschäftigungsvorrichtung 0 in einem zweiten Zustand, in welchem das Objekt 4 von der von der Objekthaltevorrichtung 3 freigegeben ist.

Fig. 4 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 4 ist entsprechend dem Ausführungsbeispiel nach Fig. 1 bzw. Fig. 2 und Fig. 3 ausgebildet. Insbesondere um einen größeren Aktionsradius für die Beschäftigung der Katze zu ermöglichen weist die Ausführung nach Fig. 4 an der Haltegriffvorrichtung 1 eine Rolle 6 auf, mittels welcher das Verbindungsmittel 2 derart aufwickelbar ist, dass eine Distanz zwischen der Haltegriffvorrichtung 1 und der Objekthaltevorrichtung 3 variierbar ist.

Fig. 5 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 5 zeigt eine vorteilhafte Ausführung der Objekthaltevorrichtung basierend auf dem Prinzip einer definierten Passung zwischen Beute und Objekthaltevorrichtung. Dies wird erreicht durch die Maßdifferenz zweier zu fügender Teile. Die beiden Passteile weisen dasselbe Nennmaß auf, sind aber unterschiedlich toleriert, zum Beispiel erhält die Beute 5.4 eine positive Toleranz auf das Nennmaß. Sie lässt sich so nur über eine geringe Quetschung in die Objekthaltevorrichtung einführen. Diese Quetschung hält dann auch die Beute in der Objekthaltevorrichtung. Die ist auch erreichbar durch eine negative Toleranz der Objekthaltevorrichtung 5.3 sowie über deren Kombinationen.

Fig. 6 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 6 zeigt eine vorteilhafte Ausführung der Objekthaltevorrichtung 6.2 basierend auf einer Fixierung durch Haltebacken 6.3, die ihrerseits mit Federn bzw. einem Federmechanismus in der Objekthaltevorrichtung befestigt sind. Die Position der Haltebacken ist so ausgeführt, dass beim Bestücken der Objekthaltevorrichtung mit der Beute 6.4 die Haltebacken von der Beute aus ihre Ausgangsposition weggedrückt werden und der Federmechanismus die Haltebacken gegen die Beute drückt und sie so fixiert.

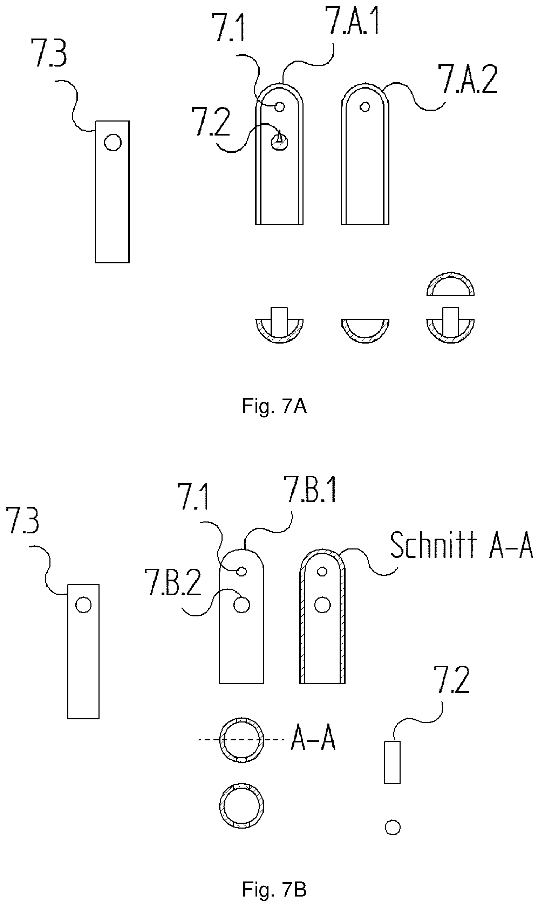

Fig. 7A zeigt ein weiteres Ausführungsbeispiel einer erfindungsgemäßen Beschäftigungsvorrichtung 0 zur Verwendung für Katzen. Die Beschäftigungsvorrichtung 0 nach Fig. 7A zeigt eine vorteilhafte Ausführung der Objekthaltevorrichtung 7.A.1 basierend auf einem mehrteiligen Stecksystem mit einem Aufnahmeplatz für die Beute 7.3. Die Besonderheit hier liegt in einem kombinierten Funktionselement 7.2, dass die Beute fixiert und bei dem Entnahmeversuch mit einer bestimmten Kraft diese auch freigibt. Die Beute weist ein Loch bzw. eine Bohrung auf im Durchmesser des Funktionselements. Das Funktionselement 7.2 ist in einem Teil des Stecksystems 7.A.1 befestigt. Die Beute wird in ihrem Aufnahmeplatz positioniert und mit seiner Bohrung über das Funktionselement geschoben. Anschließend wird die Objekthaltevorrichtung mit den verbleibenden Halteteilen 7.A.2 verschlossen. Beim Herausziehen der Beute wird durch ein Schneidmechanismus im Funktionselement die Beute freigegeben.

Fig. 7B zeigt ein weiteres Ausführungsbeispiel einer erfindungsgemäßen Beschäftigungsvorrichtung 0 zur Verwendung für Katzen. Die Beschäftigungsvorrichtung 0 nach Fig. 7B zeigt eine vorteilhafte Ausführung der Objekthaltevorrichtung 7.B.1 basierend auf dem Prinzip von Objekthaltevorrichtung 7.A.1. Hier besteht die Objekthaltevorrichtung auch aus einem mehrteiligen Stecksystem, das Funktionselement 7.B.3 ist aber nicht fest mit diesem verbunden. Die Objekthaltevorrichtung 7.B.1 weist eine Bohrung für die Beute und eine Bohrung für das Funktionselement auf. Die Beute 7.3 wird so in die Objekthaltevorrichtung geschoben, das das Funktionselement über die Objekthaltevorrichtung durch die Bohrung der Beute geschoben wird und sich so selbst innerhalb der Objekthaltevorrichtung fixiert. Beim Herausziehen der Beute wird durch ein Schneidmechanismus im Funktionselement die Beute freigegeben.

Fig. 7C zeigt zwei Ausführungsbeispiele des Funktionselementes 7.2 nach Fig. 7A und 7B. Beiden gemeinsam ist ein scharfer Schneidmechanismus 7.2.1, der die Beute beim Herausziehen erst einschneidet und dann aufschneidet und so die Beute freigibt. Eine Ausführung ist derart gestaltet, das der Schneidmechanismus nicht erhaben aus dem Funktionselement herausragt. Dies ist insbesondere vorteilhaft, um sich beim Montieren mit der Objekthaltevorrichtung gemäß 7B nicht an der Schneide zu verletzen. Bei einer weiteren Ausführung 7A ist die Schneide der Schneidvorrichtung erhaben im Funktionselement befestigt, welches sich aber fest in einem Teil der Objekthaltevorrichtung befindet. Durch geeignete Konstruktionsausführung wird eine mögliche Verletzung beim Bestücken mit der Beute vermieden.

Fig. 8 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 8 zeigt eine vorteilhafte Ausführung der Objekthaltevorrichtung, die eine Bohrung für die Beute aufweist. Innerhalb dieser Bohrung befindet sich ein Bereich mit einem erhabenen Muster 8.3, welches so an dieser Stelle den Innendurchmesser der Bohrung zur Aufnahme der Beute 8.4 verringert. Beim Bestücken mit der Beute wird diese in dem erwähnten Bereich gequetscht und fixiert so diese.

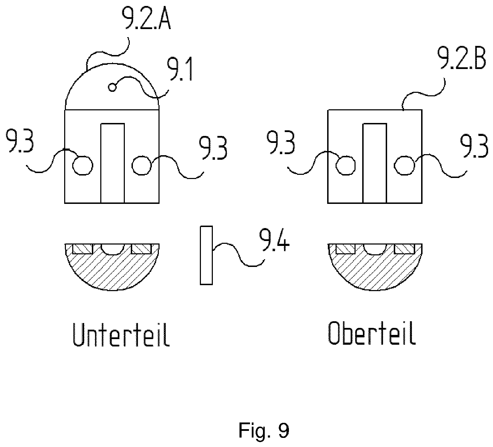

Fig. 9 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 9 zeigt eine vorteilhafte Ausführung der Objekthaltevorrichtung, die das Fixierprinzip nach Fig. 5 und die Bestückung nach Fig. 7A kombiniert. Die Objekthaltevorrichtung 9.2 besteht aus zwei Teilen, einem Ober und einem Unterteil. Beide besitzen eine Aussparrung für die Beute 9.4 sowie Magnete 9.3 zur Fixierung beim Zusammenstecken. Die Aussparrung für die Beute folgt dem Prinzip einer Passung wie unter Fig. 5 beschrieben. Die Beute wird in die Aussparrung des Unterteils gelegt und durch anschließendes bündiges Aufsetzen des Oberteils fixiert. Die Magnete halten Ober und Unterteil fest zusammen.

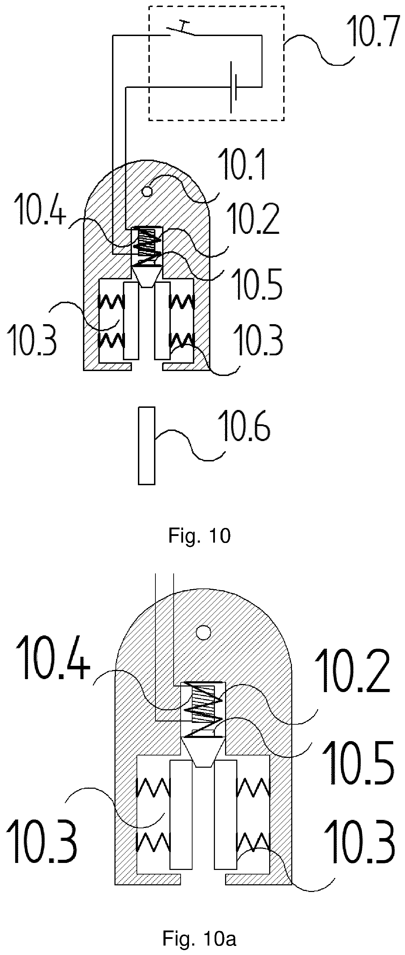

Fig. 10 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 10 zeigt eine vorteilhafte Ausführung der Objekthaltevorrichtung, mit der die Beute 10.6 unabhängig von der Aktivität der Katze über einen Steuermechanismus 10.7 freigegeben werden kann. Der Steuermechanismus befindet sich vorteilhaft an der Haltevorrichtung. Eine Feder 10.2 in der Objekthaltevorrichtung drückt über ein konisches Bauteil 10.5 die Haltebacken 10.3 für die Beute so weit auseinander, dass die Objekthaltevorrichtung mit der Beute problemlos bestückt werden kann. Dann wird über einen Schalter 10.7 ein Elektromagnet 10.4 mit einer Stromquelle bestromt. Der Elektromagnet ist innerhalb der Feder positioniert und zieht ein magnetisches Material an, welches sich vorteilhaft am konischen Bauteil befindet. Die Anziehungskraft des Elektromagneten ist größer als die Federkraft und somit wird das konische Bauteil, das sich zwischen den Haltebacken befindet, aus diesen ganz oder teilweise herausgezogen. Als Folge hiervon fixieren die Haltebacken jetzt die Beute. Wird der Stromkreis nun wieder unterbrochen, so drückt das konische Bauteil die Haltebacken über die Feder auseinander und gibt somit die Beute frei.

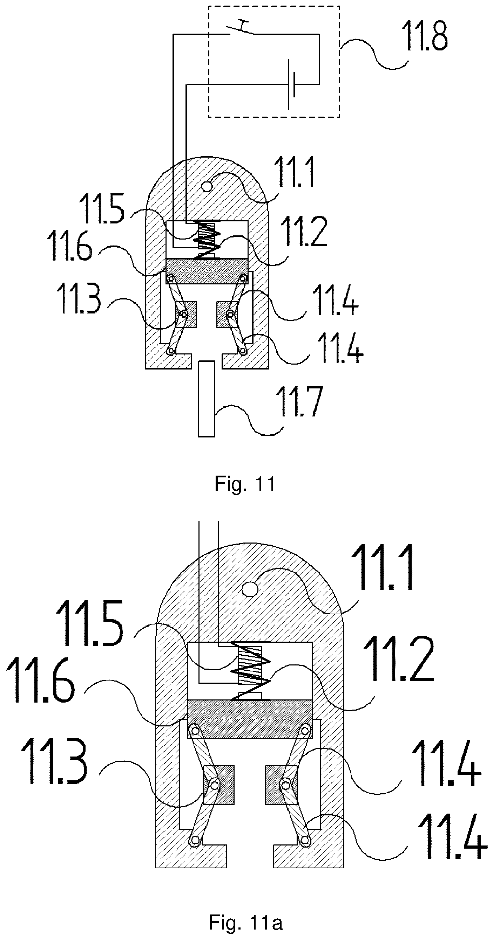

Fig. 11 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 11 zeigt eine vorteilhafte Ausführung der Objekthaltevorrichtung, basierend auf dem Prinzip von Fig.10. Im Gegensatz zu Fig. 10 besteht hier die Objekthaltevorrichtung nicht aus einem Mehr - Federsystem (Federn an den Haltebacken und Feder am konischen Bauteil) sondern aus einem Gelenksystem mit Elektromagnet 11.5, Feder 11.2, Führungszylinder 11.6, Gelenke 11.4 und Haltebacken 11.3. Der Führungszylinder wird durch Federkraft oder Elektromagnetismus innerhalb seiner Bohrung bewegt. Durch die Gestaltung der Gelenke 11.4 werden die Haltebacken 11.3 mittels des Führungszylinders sich entweder nach Innen oder nach Außen bewegen und somit die Beute 11.7 fixieren oder freigeben.

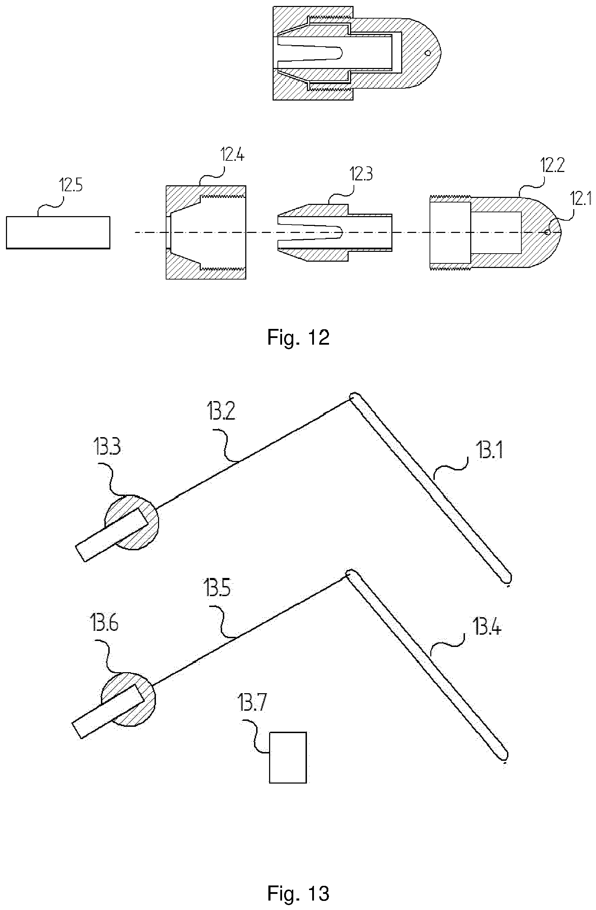

Fig. 12 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 12 zeigt eine vorteilhafte Ausführung der Objekthaltevorrichtung. Die Objekthaltevorrichtung besteht aus einem Einsatz 12.3 der Haltebacken bzw. Haltenasen aufweist. Dieser Einsatz wird in den Grundkörper 12.2 der Objekthaltevorrichtung gesteckt. Anschließend wird eine spezielle Überwurfmutter 12.4 auf den Grundkörper über ein Gewinde geschraubt. Je weiter die Überwurfmutter aufgeschraubt wird, desto mehr werden die Nasen des Einsatzes zusammengedrückt. So kann bei wenig aufgeschraubter Überwurfmutter die Objekthaltevorrichtung problemlos mit der Beute 12.5 bestückt werden. Mit dem Maß der weiteren Aufschraubung wird die Beute immer mehr fixiert. So lassen sich unterschiedliche Schwierigkeitsgrade zum Auslösen der Beute einstellen.

Fig. 13 zeigt ein weiteres Ausführungsbeispiel einer erfindungsgemäßen Beschäftigungsvorrichtung 0 zur Verwendung für Katzen. Die Beschäftigungsvorrichtung 0 nach Fig. 13 zeigt eine vorteilhafte Ausführung der Sensoroptionen 13.1, 13.2 und 13.3 zur Erfassung bzw. Übermittlung von spielspezifischen Parametern wie beispielsweise Zeitdauern, Wegstrecken und/oder Kraftaufwände. Diese Informationen, deren Steuerung einschließlich der Sensoren und Speicherung sowie deren Übertragung können zentral an einem Ort der Beschäftigungsvorrichtung angebracht wie nach 13.4 oder 13.5 oder 13.6 sein oder dezentral, d.h. die einzelnen Sensoren übermitteln oder speichern ihre Messwerte selbst. Das Auslesen bzw. Übertragen der Messwerte an die App 13.7, welche vorliegend auf bzw. von einem Smartphone (13.7) ausgeführt wird, kann leitungsgebunden oder nicht leitungsgebunden (z.B. Funkverbindung) erfolgen.

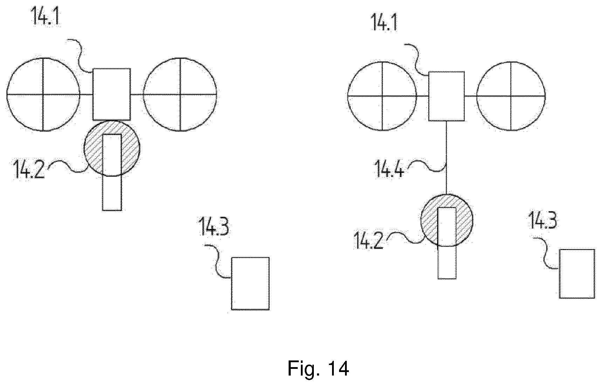

Fig. 14 zeigt ein weiteres Ausführungsbeispiel einer erfindungsgemäßen Beschäftigungsvorrichtung 0 bzw. eines erfindungsgemäßen Beschäftigungssystems zur Verwendung für Katzen. Die Beschäftigungsvorrichtung 0 nach Fig. 14 zeigt eine vorteilhafte Ausführung der Bewegungsfernsteuerung 14.3 der Objekthaltevorrichtung, beispielsweise mit einer ferngesteuerten Drohne 14.1 die erfindungsgemäß die Objekthaltevorrichtung 14.2 und/oder das Verbindungsmittel 14.4 zur Objekthaltevorrichtung beinhaltet oder eine Aufnahme und/oder Befestigung/Montage für diese aufweist. Hierdurch wird erfindungsgemäß durch vorteilhafte Weise ein deutlich größerer Bewegungsspielraum der Katze ermöglicht.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 0: Beschäftigungsvorrichtung
- 1: Haltegriffvorrichtung (Beschäftigungsvorrichtung (0))
- 2: Verbindungsmittel/Schnur (Beschäftigungsvorrichtung (0))
- 3: Objekthaltevorrichtung (Beschäftigungsvorrichtung (0))
- 4: Objekt/Beute/Futtermittel
- 5: Mechanismus/Auslösemechanismus
- 5.3: Maßangabe Beute
- 5.4: Maßangabe Objekthaltevorrichtung
- 6: Rolle
- 6.1: Befestigungsmöglichkeit Objekthaltevorrichtung
- 6.2: Objekthaltevorrichtung
- 6.3: Halteklammern
- 6.4: Beute
- 7: Hilfsmechanismus zum Auslösen
- 7.1: Befestigungsmöglichkeit Objekthaltevorrichtung
- 7.A.1: Objekthaltevorrichtung Teil 1
- 7.A.2: Objekthaltevorrichtung Teil 2
- 7.2: Funktionselement
- 7.3: Beute
- 7.B.1: Objekthaltevorrichtung Teil 1
- 7.B.2: Öffnung für Funktionselement
- 7.2.1: Schneidelement
- 8.1: Befestigungsmöglichkeit Objekthaltevorrichtung
- 8.2: Objekthaltevorrichtung
- 8.3: Fixiereinrichtung für Beute
- 8.4: Beute
- 9.1: Befestigungsmöglichkeit Objekthaltevorrichtung
- 9.2.A: Objekthaltevorrichtung Teil 1
- 9.2.B: Objekthaltevorrichtung Teil 2
- 9.3: Magnete
- 9.4: Beute
- 10.1: Befestigungsmöglichkeit Objekthaltevorrichtung
- 10.2: Feder
- 10.3: Haltebacken
- 10.4: Elektromagnet
- 10.5: konisches Bauteil mit magnetischem Material
- 10.6: Beute
- 10.7: Auslöse Funktionselement
- 11.1: Befestigungsmöglichkeit Objekthaltevorrichtung
- 11.2: Feder
- 11.3: Haltebacken
- 11.4: Gelenkarme
- 11.5: Elektromagnet
- 11.6: Führungszylinder mit magnetischem Material
- 11.7: Beute
- 11.8: Auslöse Funktionselement
- 12.1: Befestigungsmöglichkeit Objekthaltevorrichtung
- 12.2: Objekthaltevorrichtung Grundkörper
- 12.3: Halteeinsatz
- 12.4: Überwurfmutter
- 12.5: Beute
- 13.1: mögliche Position von Sensor bzw. Sensoren
- 13.2: mögliche Position von Sensor bzw. Sensoren
- 13.3: mögliche Position von Sensor bzw. Sensoren
- 13.4: mögliche Position der zentralisierten Steuerungseinheit der Sensoren
- 13.5: mögliche Position der zentralisierten Steuerungseinheit der Sensoren
- 13.6: mögliche Position der zentralisierten Steuerungseinheit der Sensoren
- 13.7: Applikation (App.)/Smartphone (oder Tablet oder dergleichen)
- 14.1: fernsteuerbares Bewegungssystem (beispielsweise Drohne)
- 14.2: Objekthaltevorrichtung
- 14.3: Steuerung des Bewegungssystems inclusive der Objekthaltevorrichtung
- 14.4: Verbindungsmittel zwischen Bewegungselement und der Objekthaltevorrichtung

## Patentansprüche

1. Beschäftigungsvorrichtung bzw. -system, insbesondere zur Verwendung für Haustiere wie Katzen, umfassend
eine zum Bedienen durch einen Nutzer vorgesehene Haltegriffvorrichtung (1),
eine zum Halten eines Objektes (4, 4a, 6.4, 7.3, 8.4, 9.4, 10.6, 11.7, 12.5) vorgesehene Objekthaltevorrichtung (3, 3a),
und
ein zum Verbinden der Haltegriffvorrichtung (1) mit der Objekthaltevorrichtung (3) vorgesehenes Verbindungsmittel (2),
wobei das aufnehmbare Objekt eine richtige, von der Katze verzehrbare bzw. essbare Beute ist.

2. Beschäftigungsvorrichtung bzw. -system nach Anspruch 1, wobei die Haltegriffvorrichtung (1) eine Rolle (6) aufweist, mittels welcher das Verbindungsmittel (2) derart aufwickelbar bzw. abwickelbar ist, dass eine Distanz zwischen der Haltegriffvorrichtung (1) und der Objekthaltevorrichtung (3) variierbar ist.

3. Beschäftigungsvorrichtung bzw. -system nach Anspruch 1 oder Anspruch 2, wobei die Objekthaltevorrichtung (3) dazu eingerichtet ist, das Objekt (4, 4a, 6.4, 7.3, 8.4, 9.4, 10.6, 11.7, 12.5) mechanisch oder elektromechanisch zu halten.

4. Beschäftigungsvorrichtung bzw. -system nach Anspruch 3, wobei die Objekthaltevorrichtung (3) eine Befestigungseinrichtung (6.1, 7.1, 8.1, 9.1, 10.1, 11.1, 12.1) für das Verbindungsmittel (2) aufweist.

5. Beschäftigungsvorrichtung bzw. -system nach einem der Ansprüche 1 bis 4, wobei die Objekthaltevorrichtung (3) und das Objekt (4, 4a, 6.4, 7.3, 8.4, 9.4, 10.6, 11.5) kraftschlüssig, insbesondere reibschlüssig (vgl. insbesondere Fig. 5), miteinander verbindbar sind.

6. Beschäftigungsvorrichtung bzw. -system nach Anspruch 5, wobei zum Entfernen der Beute eine Kraft von 0,01 N bis 20 N erforderlich ist, wobei die Kraft vorzugsweise einstellbar ist.

7. Beschäftigungsvorrichtung bzw. -system nach einem der Ansprüche 1 bis 6, wobei die Objekthaltevorrichtung (3) eine Aufnahme (6.2, 12.3) aufweist, durch welche das Objekt (6.4, 12.5) mittels an der Aufnahme (6.2, 12.3) durch Federkraft befestigten Haltebacken (6.3) oder mittels Zusammendrücken von Haltegreifern (12.3) über eine Drehbewegung nach Art einer Überwurfmutter (12.4) aufnehmbar ist.

8. Beschäftigungsvorrichtung bzw. -system nach Anspruch 7, wobei die Überwurfmutter auf den Grundkörper (12.2) der Haltevorrichtung aufschraubbar ist, wobei die Stärke der Fixierung des Objekts vorzugsweise durch die Anzahl der aufgeschraubten Gewindegänge und das Maß der Aufschraubung einstellbar ist.

9. Beschäftigungsvorrichtung bzw. -system nach Anspruch 8, wobei die Objekthaltevorrichtung (3) ferner eine Auslösevorrichtung (10.2, 10.3, 10.4, 10.5, 10.7, 11.2, 11.3, 11.4, 11.5, 11.6, 11.8) aufweist, welche zur Freigabe des zwischen den Haltebacken (10.3, 11.3) angeordneten Objekts (10.6, 11.7) eingerichtet bzw. ausgebildet ist. (Zeichnung 10, 11). Diese kann vorteilhafterweise durch einen Hilfsmechanismus (7) ermöglicht werden. Die Bügel (11.4) der Haltebacken (11.3) sorgen in der Auslösevorrichtung (11.2, 11.3, 11.4, 11.5, 11.6, 11.8) für ein geführtes Fixieren und Lösen des Objektes (10.6, 11,7).

10. Beschäftigungsvorrichtung bzw. -system nach Anspruch 9, wobei die Haltegriffvorrichtung (1) einen Schalter (5, 10.7, 11.8) aufweist, welcher zur Betätigung der Auslösevorrichtung (10.2, 10.3, 10.4, 10.5, 10.7, 11.2, 11.3, 11.4, 11.5, 11.6, 11.8) vorgesehen ist.

11. Beschäftigungsvorrichtung bzw. -system nach einem der Ansprüche 1 bis 10, wobei die Objekthaltevorrichtung (3) eine erste Wandung (7.A.1) mit einem Haltestift (7.2, Fig. 7C) und eine zweite Wandung (7.A.2) aufweist, wobei die erste Wandung (7.A.1) und die zweite Wandung (7.A.2) miteinander verbindbar sind.

12. Beschäftigungsvorrichtung bzw. -system nach Anspruch 11, wobei der Haltestift (7.2, 7.B.3, Fig. 7C) eine spitze und/oder scharfe Schneidfläche aufweist, die beim Herausziehen des Objekts aus der Objekthaltevorrichtung das Objekt aufschneidet bzw. einschneidet und somit zur Entnahme freigibt bzw. die Entnahme erleichtert.

13. Beschäftigungsvorrichtung bzw. -system nach Anspruch 11 oder Anspruch 12, wobei die Objekthaltevorrichtung (7.B.1) eine zum Haltestift (7.B.3) korrespondierende Öffnung aufweist, mit der das Objekt (7.3) beim Hineinschieben in das Objekt (7.B.1) fixierbar ist.

14. Beschäftigungsvorrichtung bzw. -system nach einem der Ansprüche 7 bis 10 oder nach einem der Ansprüche 11 bis 13, wobei die Objekthaltevorrichtung (9.2) aus einem Unterteil (9.2A) und einem Oberteil (9.2.B) besteht, und wobei sich vorzugsweise in dem Unterteil und Oberteil Magnete (9.3) befinden, die beim Zusammenstecken von Unterteil und Oberteil das Beuteobjekt (9.4) durch eine geeignete Passung fixieren.

15. Beschäftigungsvorrichtung bzw. -system nach einem der Ansprüche 1 bis 14, ferner umfassend eine Software Applikation (App), die auf einem Smartphone, Tablet, Personal Computer oder ähnliches installiert bzw. installierbar und ausgeführt bzw. ausführbar ist, mit welcher verschiedenste Aktivitäten der Katze, die zum Teil oder vollständig von der Beschäftigungsvorrichtung bzw. in Kombination mit selbigem bereitgestellt werden und/oder vom Tierhalter ausgewählt, eingegeben oder vorgegeben werden können, wobei vorteilhafterweise bestimmte Spielabläufe oder - parameter, persönliche Daten, biologische Daten zu der Katze, wie Alter, Gewicht, Erkrankungen, und/oder dergleichen, und/oder daraus abgeleitete Kenngrößen bzw. Aktivitätsgrößen bzw. Aktivitätsparameter erfassbar und/oder berücksichtigbar sind, und wobei bevorzugt erfolgte Spielabläufe und deren Kenngrößen bzw. Parameter speicherbar bzw. loggbar sind, insbesondere in einem Speiche, so dass weiter bevorzugt später auch eine Auswertung bzw. Analyse der gespeicherten Daten und/oder Informationen bzw. der daraus abgeleiteten Informationen ermöglicht ist.
